# EUROPEAN PATENT APPLICATION

(11) **EP 1 110 780 A2**
(43) Date of publication of application: **27.06.2001**
(21) Application number: 00123495.4
(22) Date of filing: 08.11.2000
(51) Int. Cl.: B60J 5/06

(54) **Recessed side door for truck bodies**

(30) Priority: 23.12.1999 IT BO990144 U
(71) Applicant: Pastore & Lombardi S.r.l., 40057 Cadriano di Granarolo Emilia (Bologna) (IT)
(72) Inventor: Bortolotti, Lando, 40141 Bologna (IT)
(74) Representative: Modiano, Guido, Dr.-Ing.

(57) **Abstract**

A recessed side door for bodies of trucks, trailers or the like, in which the upper (2,3) and lower (4,5) edges of the door are respectively articulated to the ends of two pairs of upper (6,7) and lower (8,9) arms which are associated like an articulated parallelogram with two pairs of fulcrums (10,11,12,13) which are fixed externally, respectively on top of the body and under it.

## Description

The present invention relates to a recessed side door for bodies of trucks, trailers or the like.

For use in particular environmental situations, such as historical city centers, areas of intense traffic, narrow lanes or others, the side doors of the bodies of trucks, trailers or the like which are hinged laterally and can be opened outwardly suffer considerable drawbacks, since often there is not enough room to allow to open them easily.

Currently commercially available devices which offer alternatives to lateral hinging entail the presence of sliding guides or articulation arms which inconveniently occupy regions inside the body, limiting its access, or outside regions, producing an unwanted external space occupation and sometimes having components which are subjected to deterioration due to the weather.

The aim of the present invention is to obviate the above drawbacks and to meet the mentioned requirements, i.e., to provide a recessed lateral door for bodies of trucks, trailers or the like which remarkably reduces outside space occupation upon opening and closure, does not entail a reduction in the space inside the body and also does not entail the presence of components outside the body which can be bulky or subjected to deterioration.

Within the scope of this aim, an object of the present invention is to provide a structure which is simple, relatively easy to provide in practice, safe in use, effective in operation, and relatively low in cost.

This aim and this object are achieved by the present recessed side door for bodies of trucks, trailers or the like, characterized in that the upper and lower edges of the door are respectively articulated to the ends of two pairs of upper and lower arms which are associated like an articulated parallelogram with two pairs of fulcrums fixed externally, respectively on top of the body and under it.

Further characteristics and advantages of the present invention will become better apparent from the detailed description of a preferred but not exclusive embodiment of a recessed side door for bodies of trucks, trailers or the like according to the invention, illustrated only by way of non-limitative example in the accompanying drawings, wherein:

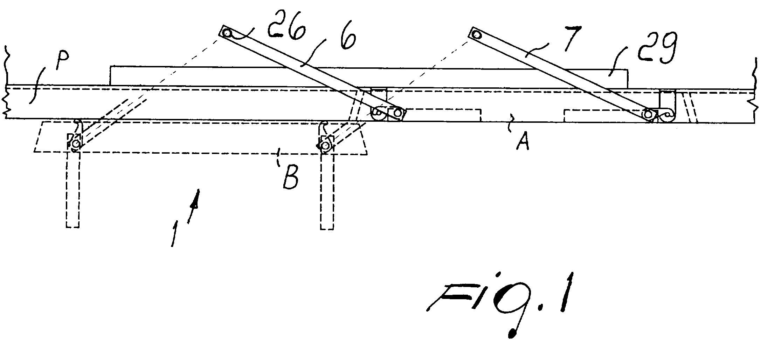

Figure 1 is a schematic top view of a recessed side door for bodies of trucks, trailers or the like, according to the invention;

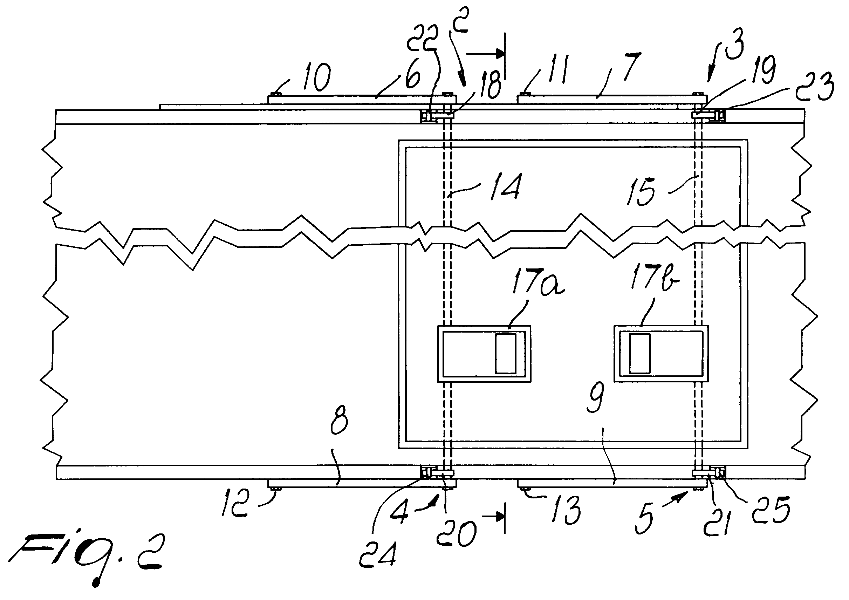

Figure 2 is a schematic front view of the recessed door;

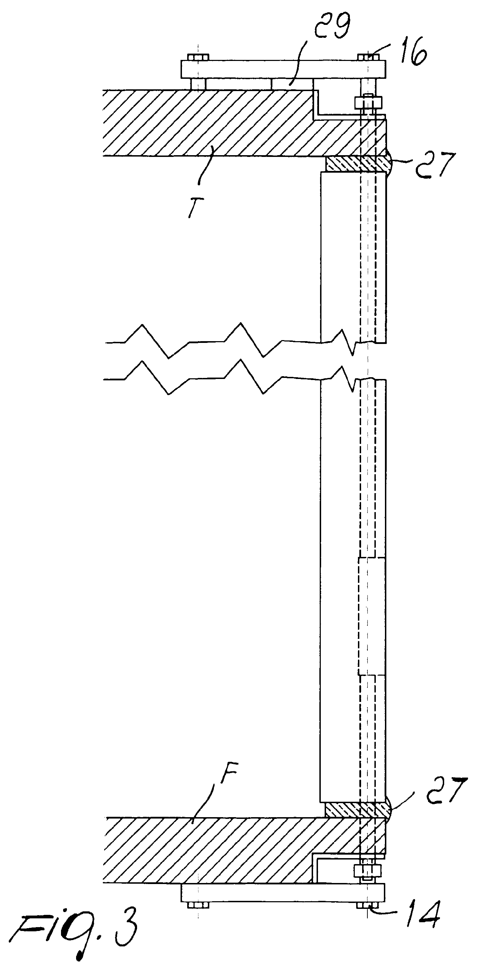

Figure 3 is a partially sectional schematic front view of a recessed side door according to the invention.

With reference to the figures, the reference numeral 1 generally designates a recessed side door for bodies of trucks, trailers or the like according to the invention; a side wall P, the roof T and the bottom F of the bodies have been shown schematically in the accompanying figures.

The upper edges 2 and 3 and the lower edges 4 and 5 of the door are respectively articulated to the ends of two pairs of arms, an upper one 6, 7 and a lower one 8, 9, which are associated like an articulated parallelogram with two pairs of fulcrums 10, 11 and 12, 13 which are fixed externally respectively on top of the body and under it.

The fulcrums 10, 11, 12, 13 are shifted laterally, with respect to the edges of the opening provided in the body for recessing the door, substantially by half the width of the door and are shifted from the edge of the vertical surface of the body so that the door protrudes as little as possible from the side upon opening.

Two vertical stems 14 and 15 are articulated to each one of the sides of the door and are threaded, at their ends, for the screwing of respective end nuts 16 which allow to articulate the ends of the arms 6, 7, 8 and 9.

The stems 14, 15 are provided with respective handles 17a, 17b for rotary manual actuation in opposite directions for opening and closing the door, and each one has a rigidly coupled upper pawl 18, 19 and a lower pawl 20, 21 which are designed to cooperate with corresponding pawls 22, 23, 24, 25 which are fixed to the body; by acting on the handles 17a, 17b, which when the door is closed are recessed in the thickness of the door, it is possible to engage or disengage each pawl with respect to the corresponding fixed detent and to move the door at the end of the two pairs of arms 6,7,8,9 in order to move the door from a closed configuration (A) to an open configuration (B) and vice versa.

Advantageously, the ends of the arms are associated with the fulcrums 10, 11, 12 and 13 by means of corresponding elongated slots 26 which in the closed configuration allow the outer surface of the door to be flush with the outer surface of the body.

The middle lip of a gasket 27 is fixed peripherally to the door; said gasket is made of a deformable material, such as rubber, has a substantially T-shaped cross-section, and is designed to form a seal against the peripheral edge of the outer face of the corresponding opening of the body.

A longitudinal sliding pad 29 is fixed above the opening of the door, on the roof of the body, is made of a material of the type known by the registered trademark Teflon, and is designed to slidingly support the upper arms 6 and 7.

It is noted that by increasing the length of the arms that are articulated like a parallelogram and by correspondingly moving the pairs of fulcrums toward the longitudinal central plane of the body it is possible to open and close the door so that it protrudes very little from the body.

It has thus been shown that the invention achieves the intended aim and object, and in particular that it provides a recessed lateral door for bodies which greatly reduces outside space occupation upon opening and closure, does not entail a reduction in the useful space inside the body, and does not entail components outside the body which are bulky or subject to deterioration.

The invention thus conceived is susceptible of numerous modifications and variations, all of which are within the scope of the inventive concept.

All the details may furthermore be replaced with other technically equivalent ones.

In practice, the materials employed, as well as the shapes and the dimensions, may be any according to requirements without thereby abandoning the protective scope of the appended claims.

The disclosures in Italian Utility Model Application No. BO99U000144 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A recessed side door for bodies of trucks, trailers or the like, characterized in that the upper (2,3) and lower (4,5) edges of the door are respectively articulated to the ends of two pairs of upper (6,7) and lower (8,9) arms which are associated like an articulated parallelogram with two pairs of fulcrums (10,11,12,13) which are fixed externally, respectively on top of the body and under it.

2. The door according to claim 1, characterized in that two vertical stems (14,15) are articulated to each side of the door and are provided with respective handles (17a, 17b) for manual actuation and with an upper pawl (18,19) and a lower pawl (20,21) which are suitable to cooperate with corresponding detents (22,23,24,25) which are fixed to the body.

3. The door according to claim 1, characterized in that the ends of said pairs of arms (6,7,8,9) are associated with said fulcrums (10,11,12,13) by means of corresponding elongated slots (26) which allow to arrange the outer surface of said door so that it is flush with the outer surface of said body.

4. The door according to one or more of the preceding claims, characterized in that it is peripherally provided with an outer gasket (27) which is suitable to form a seal against the peripheral edge of a corresponding opening of the body.

5. The door according to claim 4, characterized in that above the opening of the door, on the roof of the body, there is a longitudinal sliding pad (29) for slidingly supporting said upper arms (6,7).
